# EUROPÄISCHE PATENTSCHRIFT

(11) **EP 1 355 093 B1**
(45) Veröffentlichungstag und Bekanntmachung des Hinweises auf die Patenterteilung: **13.08.2008**
(21) Anmeldenummer: 03008287.9
(22) Anmeldetag: 09.04.2003
(51) Int. Cl.: F16J 15/44, F16J 15/447

(54) **Berührungslose Dichtung**
Non-contacting seal
Joint d'étanchéité sans contact

(30) Priorität: 17.04.2002 DE 10217060
(43) Veröffentlichungstag der Anmeldung: 22.10.2003
(73) Patentinhaber: SIEMENS AKTIENGESELLSCHAFT, 80333 München (DE)
(72) Erfinder: Seitz, Peter, 91224 Pommelsbrunn (DE)

(56) Entgegenhaltungen:
- EP-A- 1 039 183
- US-A- 6 036 437
- US-B1- 6 290 232

## Beschreibung

Die Erfindung betrifft eine berührungslose Dichtung. Die Berührungslosigkeit der Dichtung betrifft zumindest den Betriebszustand bei einer eingelaufenen berührungslosen Dichtung. Die berührungslose Dichtung weist zumindest ein kreisförmiges äußeres Element und ein kreisförmiges inneres Element auf. Das äußere und das innere Element sind so ausführbar, dass diese berührungslos ineinanderfügbar sind. Zumindest eines der Elemente ist rotatorisch bewegbar. Eine derartige berührungslose Dichtung ist beispielsweise aus dem Buch mit dem Titel "Dubbel Taschenbuch für Maschinenbau", 18. Aufl., S. G87, Bild 31c, bekannt.

Die Dichtwirkung ergibt sich durch einen möglichst kleinen flächigen Abstand zumindest in Teilbereichen zwischen dem äußeren kreisförmigen Element und dem inneren kreisförmigen Element. Je kleiner der Abstand ist, desto besser ist die Dichtwirkung. Nachteilig dabei ist allerdings, dass bei zu kleinen Abständen die berührungslose Dichtung im Betrieb beschädigt wird. Schäden können beispielsweise durch ein Heißlaufen und/oder das Fressen der Dichtung verursacht sein. Bei derartigen Schäden kommt es auch bei Rotation des äußeren kreisförmigen Elementes im Verhältnis zum inneren kreisförmigen Element zu schadensverursachenden Berührungen der Elemente untereinander.

Aus der EP 1 039 183 A2 ist eine gattungsgemäße Dichtungsanordnung mit einem gebogenen Element, das eine Längsachse und eine der Längsachse gegenüberliegende radial nach innen weisende Seite aufweist, bekannt. Die radial nach innen weisende Seite weist einen strömungsaufwärtigen Längsabschnitt und einen strömungsabwärtigen Längsabschnitt auf. Der strömungsaufwärtige Längsabschnitt weist eine Anzahl in Längsrichtung voneinander beabstandeter, in Umfangsrichtung sich erstreckender und radial nach innen vorragender Dichtungszähne auf. Der strömungsabwärtige Längsabschnitt weist eine in Umfangsrichtung sich erstreckende Bürstendichtung mit einer Anzahl Borsten auf, wobei die Bürstendichtung in Längsrichtung von den Dichtungszähnen beabstandet ist und die Borsten bei der Betrachtung in einem Querschnitt des gebogenen Elements gemäß einer Schnittebene, bei dem die Längsachse in dieser Schnittebene liegt, radial nach innen vorragen. Die radial nach innen weisende Seite weist einen Radius auf, der sich in Längsrichtung derart verändert, dass in der Längsrichtung zwischen der Bürstendichtung und einem der Bürstendichtung in Längsrichtung zu nächst liegenden Zahn der Dichtungszähne der Radius größer ist als in der Längsrichtung zwischen den Dichtungszähnen eines in Längsrichtung der Bürstendichtung zu nächst liegendes Paares der Dichtungszähne.

Aufgabe der vorliegenden Erfindung ist es, die Dichtwirkung berührungsloser Dichtungen zu verbessern und/oder die Schadensanfälligkeit zu vermindern.

Die Lösung der Aufgabe gelingt bei einer berührungslosen Dichtung mit den Merkmalen nach Anspruch 1.

Die berührungslose Dichtung, weist zumindest ein kreisförmiges äußeres Element und ein kreisförmiges inneres Element auf, welche berührungslos ineinanderfügbar sind, welche sich in einem Dichbeabstandet gegenüberstehen, von denen zumindest eines der Elemente rotatorisch bewegbar ist und von denen zumindest eines der Elemente einen spitzenartig rotatorisch in Umfangsrichtung verlaufenden Kamm aufweist, dadurch, dass der Dichtungsbereich, d.h. der Dichtbereich zumindest zwei kreisförmige Flächen aufweist, welche unterschiedlich größere Beabstandungen vom gegenüberliegenden Element aufweisen, als die Beabstandung des Kammes vom gegenüberliegenden Element.

Bei dieser Art der berührungslosen Dichtung sind die beiden kreisförmigen Elemente so ausführbar, dass diese voneinander zwei oder mehr unterschiedliche Abstände aufweisen. Dabei beziehen sich die Abstände entweder auf Abstände zwischen zwei Flächen und/oder zwischen einer Fläche und einem Kamm und/oder zwischen zwei Kämmen. Die unterschiedlichen Abstände sind beispielsweise durch ein Dreh- und/oder Fräswerkzeug erzeugbar. Derartige Werkzeuge weisen Mindestgrößen, wie z.B. Mindestradien auf, so dass sich insbesondere für Einkerbungen, Ecken und/oder Eckradien Mindesttiefen, Mindestbreiten und/oder Mindestradien für Ecken ergeben können. Derartige Mindestgrößen, wie Mindesttiefen bzw. Mindestbreiten bzw. Mindesteckradien haben bei der erfindungsgemäßen berührungslosen Dichtung allenfalls einen geringen negativen Einfluß auf die zu erzielende Dichtwirkung der berührungslosen Dichtung.

Durch zumindest zwei kreisförmige Flächen und den rotatorisch in Umfangsrichtung verlaufenden Kamm auf einem kreisförmigen Element ergeben sich drei Abstände zwischen den kreisförmigen Elementen. Dies trifft insbesondere auch auf den Betriebsfall, also folglich auf den Fall einer durchgeführten Rotationsbewegung zu. Idealer Weise liegt eine Achse des inneren kreisförmigen Elementes wenigstens in etwa auf einer Achse des äußeren kreisförmigen Elementes. Durch Einflüsse wie Lagerluft, der Elastizität einer Welle und/oder Fertigungstoleranzen, wie aber auch anderen Einflüssen ist es auch möglich, dass die Achsen etwas nebeneinander liegen. Durch einen Einlaufvorgang der berührungslosen Dichtung ist es durch Verformung des Kammes möglich anfänglich unter Umständen auftretende Berührungen zwischen innerem und äußerem kreisförmigen Element, insbesondere im Bereich des Kammes, wieder zu verhindern. Anfänglich auftretende Berührungen liegen dann vor, wenn die Achsen des inneren und äußeren kreisförmigen Elementes zu weit auseinander liegen. Die gegenseitige Position der Achsen hängt auch von den auf die Achsen wirkenden Achskräfte ab. Bei der Betrachtung von Abständen ist insbesondere von den Abständen im Betriebszustand der berührungslosen Dichtung auszugehen.

Insbesondere durch den geringen Abstand zwischen den rotatorisch in Umfangsrichtung verlaufenden Kamm zum gegenüberliegenden Element ergibt sich eine hohe Dichtwirkung. Dieser Abstand ist im eingelaufenen Zustand der Dichtung und im normalen Betrieb größer Null. Je kleiner der Abstand ist, desto kleiner ist auch der Stömungsquerschnitt. Die Dichtwirkung eines oder mehrerer Kämme wird ergänzt durch die Dichtwirkung einer oder mehrerer kreisförmiger Flächen, welche gegenüber anderen kreisförmig verlaufenden Flächen liegen und im Dichtungsbereich/Dichtbereich einen größeren Abstand zum gegenüberliegenden Element aufweisen als ein Kamm zum gegenüberliegenden Element. Je kleiner die Abstände, desto größer ist natürlich die Dichtwirkung. Eine derartige flächenartige Dichtung entspricht einem nach dem Stand der Technik bekannten Dichtspalt einer berührungslosen Dichtung.

Der in Umfangsrichtung rotatorisch verlaufende Kamm weist erfindungsgemäß einen Hinterschnitt und einen Vorderschnitt auf, wobei beide Schnitte in einem Abstandsbereich vom gegenüberliegenden Element enden, welcher größer ist als der Abstand der kreisförmigen Fläche mit dem kleinsten Abstand vom gegenüberliegenden Element. Beide kreisförmigen Elemente, also das innere und das äußere Element, sind auf Passsitz fertigbar, so dass beide berührungslos fügbar sind. Im Verlauf einer kreisförmigen Bewegung des inneren Elementes zum äußeren Element und/oder umgekehrt, d.h. im Verlauf des Betriebs der Dichtung, ergibt sich u.U. ein Kontakt der Elemente im Bereich des Kammes bzw. der Kämme. Ein derartiger Kontakt ist beispielsweise bedingt durch Form- und/oder Lagetoleranzen, sowie unter Umständen auch durch Lagerluft. Dabei wird der Kamm an seiner Spitze in begrenztem Umfang, vorzugsweise nur geringfügig, abgeschliffen und/oder plastisch verformt. Dadurch, dass der Kamm spitzenartig verläuft, entstehen trotz Abschliffs bzw. Verformung keine größeren Flächen, die ein Fressen und/oder Heißlaufen der Dichtung verursachen könnten. Der Hinterschnitt bzw. Vorderschnitt ist so ausführbar, dass sich darin auch ein durch Kräfte plastisch verformter - gestauchter - Kamm in seinem Fuß verbreitern kann. Das durch eine Verformung verdrängte Material führt somit nicht zu einer Vergrößerung der möglichen Berührungsfläche zwischen Kamm und gegenüberliegendem Element, so dass ein Fressen der Dichtung vermeidbar ist. Bei einem verformten Kamm mit einer Materialzunahme in einem Fußbereich des Kammes ergibt sich kein negativer Einfluss der Verformung auf die Funktion der berührungslosen Dichtung. Durch die Ausführung eines Hinterschnitts bzw. eines Vorderschnitts sind fertigungstechnisch einzuhaltende Mindestgrößen, wie Mindestradien von beispielsweise Fräswerkzeugen oder auch Mindesttiefen, einhaltbar.

Auf diese erfindungsgemäße Weise wird eine unzureichende Abdichtung durch zu große radiale und/oder axiale berührungslose Dichtspalte vermieden. Ebenso wird zumindest die Größe von eventuell notwendigen Siphonanordnungen reduziert. Die Reduzierung des Dichtspaltes bzw. die Dichtspaltabfolge der Erfindung erhöht die Dichtwirkung und verringert beispielsweise einen Ölaustritt. Weiterhin ergibt sich eine mögliche Reduzierung des Bauraumes der berührungslosen Dichtung. Mit Hilfe der erfindungsgemäßen Dichtung wird deren Effektivität wesentlich erhöht, wodurch sich Fertigungskosten verringern lassen. Weiterhin ergibt sich durch die Möglichkeit eines kompakten Aufbaus der berührungslosen Dichtung eine verbesserte Ausnutzung des vorhandenen Bauraums.

Durch die vorteilhafte Gestaltung der Dichtung bzw. des/der Dichtspalte mit kleinen, sich in begrenzten Bereichen, d.h. dem Kamm, durch plastische Verformung anpassenden Oberflächen ist es möglich, einen kleinstmöglichen Dichtspalt zu realisieren, der eine erhebliche Vergrößerung des Strömungswiderstands bewirkt. Bisher ist ein berührungsloser Dichtspalt aufgrund von Lagerspiel, Wärmedehnung, Bearbeitungstoleranzen und Verformungen relativ groß auszuführen, um ein "Fressen" der Dichtung auszuschließen. Diese Problematik wird durch die Verwendung eines oder mehrerer Kämme erheblich reduziert.

Weitere vorteilhafte Ausführungen der Erfindung werden in den Unteransprüchen 1 bis 7 angegeben.

Einsatzorte für eine erfindungsgemäße berührungslose Dichtung sind beispielsweise Abdichtungen an Fahrmotorlagern oder Getriebelagerungen für Schienenfahrzeuge. Prinzipiell ist diese Dichtung jedoch auch in anderen Bereichen, wie Getrieben, Motoren, Pumpen, Turbinen oder Werkzeug- und Produktionsmaschinen wie auch Handhabungsautomaten einsetzbar. Als Materialien für die Dichtung eignen sich Aluminium, Stahl, Guss, Eisen oder auch Kombinationen davon.

Im folgenden werden erfindungsgemäße Ausführungsbeispiele dargestellt. Dabei zeigt:
- FIG 1: die Anordnung einer berührungslosen Dichtung bezüglich einer Welle und eines Lagers,
- FIG 2: einen Ausschnitt der berührungslosen Dichtung aus Figur 1,
- FIG 3: eine Weiterbildung der berührungslosen Dichtung aus Figur 1,
- FIG 4: eine weitere Weiterbildung der berührungslosen Dichtung aus Figur 1,
- FIG 5: einen Kamm,
- FIG 6: eine weiter Ausführungsform der berührungslosen Dichtung, wobei
- FIG 7: einen Ausschnitt aus Figur 6 wiedergibt und
- FIG 8: ein weiteres Beispiel der erfindungsgemäßen Dichtung mit einem Ausschnitt in
- FIG 9: zeigt.

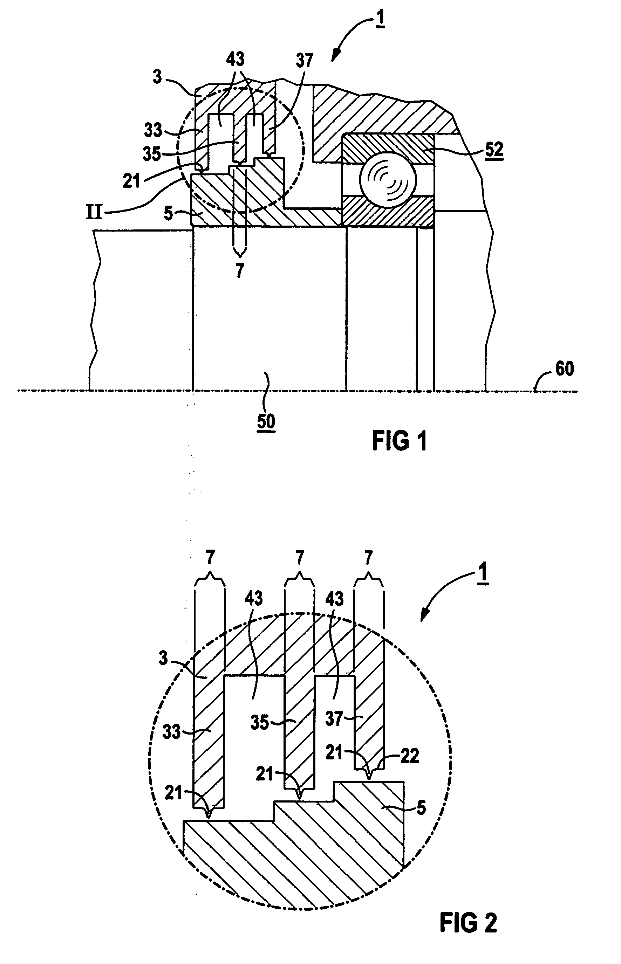

Die Darstellung gemäß Figur 1 zeigt in einem Ausschnitt II eine berührungslose Dichtung 1 gemeinsam mit einer Welle 50 und einem Lager 52. Die berührungslose Dichtung 1 weist ein kreisförmiges inneres Element 5 und ein kreisförmiges äußeres Element 3 auf, wobei die Kreisform sich durch Rotation um die Rotationsachse 60 ergibt, jedoch die Kreisform durch den Schnitt figürlich nicht darstellbar ist. Das äußere kreisförmige Element 3 weist drei Dichtstege 33, 35, 37 auf. Die Dichtstege 33, 35, 37 bilden zum inneren kreisförmigen Element 5 Dichtungsbereiche 7 aus. Zwischen den Dichtstegen 33, 35, 37 liegen Dichtkammern 43. In den Dichtungsbereichen 7 weisen die Dichtstege 33, 35, 37 Kämme 21 auf. Der Kamm 21 verläuft spitzenartig rotatorisch um eine Rotationsachse 60, welche in Figur 2 dargestellt ist. Ist ein Kamm 21 durch eine drehende Bearbeitung erzeugt, so ist dieser auch als eine angedrehte Spitze bezeichenbar. Der Kamm 21 kann in sich geschlossen sein oder auch schneckenartig verlaufen. Die nicht dargestellte Schneckenform ist so auszuführen, dass das abzudichtende Medium, wie z.B. Öl, durch Drehbewegung wieder in einen Bereich befördert wird, in dem sich das Medium befinden soll.

Die Darstellung gemäß Figur 2 zeigt den vergrößerten Ausschnitt II der berührungslosen Dichtung 1. An den Enden der Dichtstege 33, 35, 37 befinden sich die in Umfansrichtung rotatorisch verlaufende Kämme 21. Diese Kämme haben einen geringen Abstand zum gegenüber liegenden kreisförmigen inneren Element 5. Durch den geringen Abstand und die Oberflächenspannung des abzudichtenden flüssigen Elements / Mediums bilden sich Dichtungseigenschaften aus. Links und rechts des Kammes 21 bildet sich ein Kammboden 22 aus. Der Kammboden 22 weist einen großen Abstand vom kreisförmigen inneren Element 5 auf, so dass sich dadurch bei Einzelbetrachtung ohne Kamm im Vergleich zu einer bisherigen berührungslosen Dichtung ohne Kamm eine verringerte Dichtwirkung ergibt. Der große Abstand ist durch fertigungstechnische Gegebenheiten wie z.B. Mindestgrößen von Bearbeitungswerkzeugen begründet. Ein typischer Abstand ist z.B. 1,5 mm bei großen Lagern wie bei Bahnantrieben. Die Größe des Abstands ist bedingt durch die Herstellungsweise des rotatorisch verlaufenden Kammes 21 und somit ist der minimale Abstand des Kammbodens 22 vom gegenüber liegenden inneren Element 5 abhängig von der Fertigungsart des Kamms. Prinzipiell ist es wünschenswert, den Abstand minimal zu halten. Der Abstand des Kammbodens 22 ist jedoch im Vergleich zu einem kreisförmigen äußeren Element 3 und zu einem kreisförmigen inneren Element 5 ohne Kamm größer, so dass sich im Vergleich dazu durch den größeren Abstand die Dichtwirkung der Dichtstege 33, 35, 37 verringert. Allein durch den Kamm 21 ergibt sich eine Verbesserung der Dichtwirkung durch die Gesamtbetrachtung. Abhängig von der Lagergröße ändern sich natürlich auch die Maßstäbe, so dass die genannten Größenangaben nur Beispiele sind. Abstände sind, abhängig von der Dichtungsgröße und der Ausgestaltung der Dichtung auch in wenigen zehntel und/oder hundertstel Millimetern fertigbar. Die Verwendung von Kämmen zur Verbesserung der Dichtwirkung ergibt Verbesserungsfaktoren in einstelliger bis dreistelliger Höhe.

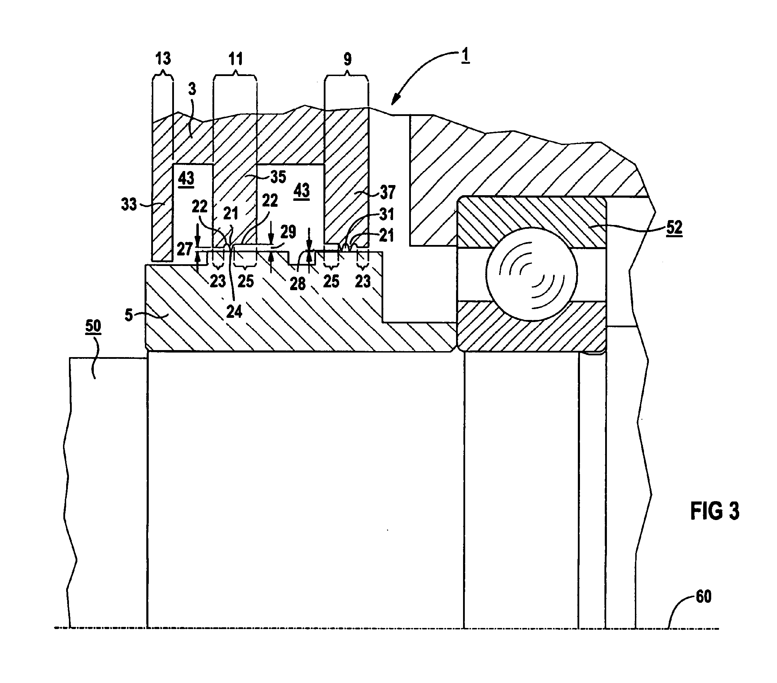

Die Darstellung gemäß Figur 3 zeigt, wie Figur 1, eine berührungslose Dichtung, wobei der Dichtsteg 33 einen Dichtungsbereich 13 mit dem inneren Element 5 aufweist. Der Abstand der beiden kreisförmigen Elemente 3, 5 im Dichtungsbereich 13 ist derart klein, wie dies bei herkömmlichen Labyrinthdichtungen üblich ist. Der Dichtsteg 35 ist in Figur 3 derart ausgeführt, dass durch ihn ein Dichtungsbereich 11 mit Dichtungsbereichen 23 und 25 ausgebildet werden. Diese Dichtungsbereiche sind, wie der Dichtungsbereich 13, flächig ausgeführte Dichtungsbereiche im Gegensatz zu dem spitzenartig ausgebildeten Dichtungsbereich 24 am Kamm 21. Der Dichtungsbereich 11 umfasst die Dichtungsbereiche 23 und 25. Der Abstand 27 des Dichtungsbereichs 23 ist beispielsweise der gleiche Abstand wie beim Dichtungsbereich 13. Innerhalb des Dichtungsbereichs 11 schließt sich an den Dichtungsbereich 23 der Kamm 21 an. Der Kamm 21 wird umgeben von den Kammgründen 22, welche einen Hinterschnitt und einen Vorderschnitt ausbilden. Aus fertigungstechnischen Gründen ist zur Ausbildung des Kamms 21 der Kammgrund 22 tiefer in das Material des Dichtstegs 35 eingerückt, als die Fläche des Dichtungsbereichs 23. An den Kamm 21 des Dichtungsbereichs 11 schließt sich der Dichtungsbereich 25 mit dem zugehörigen Abstand 29 an. Der Abstand 29 entspricht den aus Figur 2 ersichtlichen Abständen links und rechts eines Kammes und somit bekannten Abständen der Dichtstege 33, 35, 37 im Bereich des Kamms 21 in Höhe des Kammfußes 22 hin zum inneren Element 5. Ein Abstand 28 zwischen dem Kamm 21 und dem inneren Element 5 ist kleiner als die Abstände 27 und 29. In Figur 3 ist weiterhin ein Dichtsteg 37 dargestellt, welcher zwei Kämme 21 aufweist. Zusammen mit dem Dichtungsbereich 25 und dem Dichtungsbereich 23 bilden die Kämme 21 für den Dichtsteg 37 den Dichtungsbereich 9. Durch die Hintereinanderlegung zweier Kämme 21 auf einem Dichtsteg 37 wird die Dichtwirkung verbessert. Dabei sind auch mehr als zwei Kämme 21 ausführbar. Durch die Ausführung des Kammgrundes 22 bildet sich bei einem anschließenden Dichtungsbereich 23 mit dem Abstand 27 vorteilhaft eine Kavität 31, in der sich Schmutz oder auch Späne sammeln können. Sich dort sammelnder Schmutz oder Späne wird sich dann nicht mehr nachteilig auf die Drehbewegung der Dichtung aus, so dass beispielsweise ein Fressen der Dichtung vermeidbar ist.

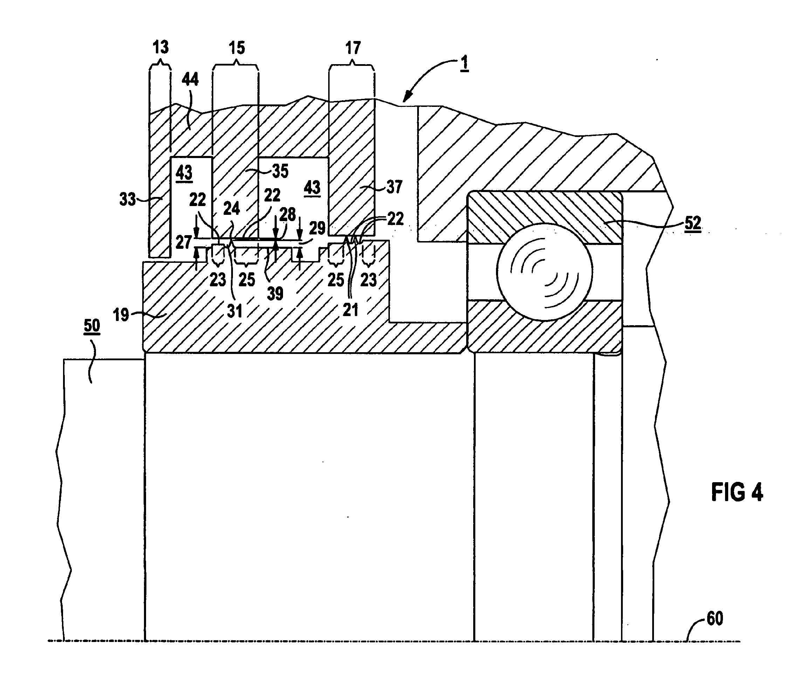

Die Darstellung gemäß Figur 4 zeigt, wie Figur 3, eine Kombination aus den verschiedenen Dichtungsbereichen 23 und 25 mit Kämmen 21, wobei die Kammstruktur bzw. die Kämme 21 sich nun auf dem inneren kreisförmigen Element 19 befinden und diesem inneren kreisförmigen Element 19 ein äußeres kreisförmiges Element 44 gegenübersteht.

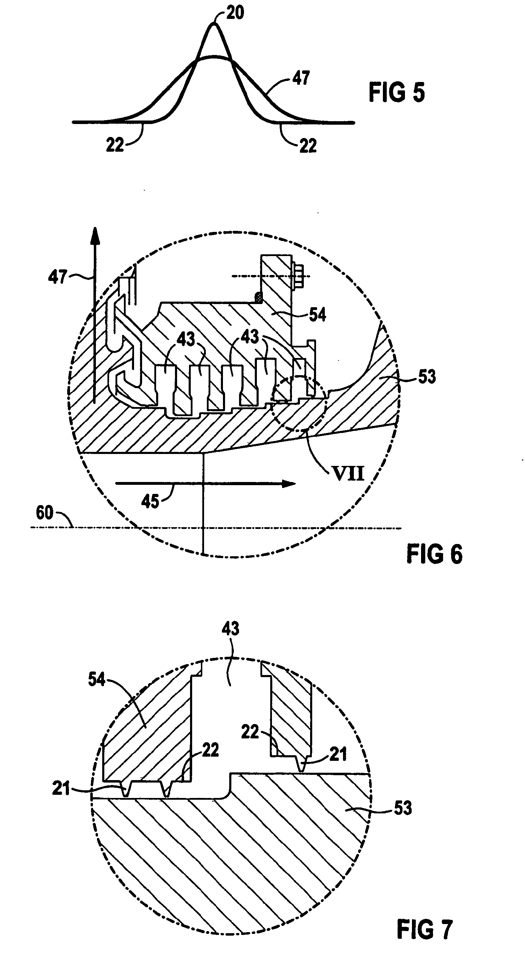

Die Darstellung gemäß Figur 5 zeigt einen Kamm 21 mit den Kammgründen 22. Durch Betrieb des Lagers wird der Kamm 21 gestaucht, so dass ein Kamm 20 in veränderter Form entsteht. Durch die kammartige Ausgestaltung der Dichtung ergibt sich bei Stauchen bzw. Abrieb der Stellen, die den kleinsten Abstand zwischen dem äußeren kreisförmigen Element und dem inneren kreisförmigen Element aufweisen, dennoch wieder eine Kammform mit einem spitzenartigen Verlauf. Dies hat den Vorteil, dass durch den beibehaltenen spitzenartigen Verlauf keine flächenartigen Dichtungsbereiche mit zu kleinem Abstand entstehen, so dass ein Fressen der berührungslosen Dichtung nicht zu befürchten ist. Der Materialschwund im Bereich der Spitze des Kamms 21 füllt den Kammboden des Kamms 20, wie dies aus Figur 5 ersichtlich ist. Der Kamm 21, 20 wirkt in seiner Funktion auch als Abscheider des abzudichtenden Mediums.

Die Darstellung gemäß Figur 6 zeigt eine berührungslose Dichtung der bereits beschriebenen Art, wobei bei dieser ein äußeres kreisförmiges Element 54 einem inneren kreisförmigen Element 53 sowohl in Axialrichtung 45 als auch in Radialrichtung 47 gegenüber steht. Aus dieser Figur 6 wird auch eine relative Betrachtungsweise bezüglich der Bezeichnungen inneres bzw. äußeres kreisförmige Element deutlich, da das innere kreisförmige Element 53 durchaus auch über das äußere kreisförmige Element hinausragt. Von Bedeutung ist bei der Betrachtungsweise insbesondere die örtliche Anordnung der Dichtungsbereiche. Der in der Figur 6 dargestellte Ausschnitt VII ist in der Figur 7 noch einmal vergrößert dargestellt.

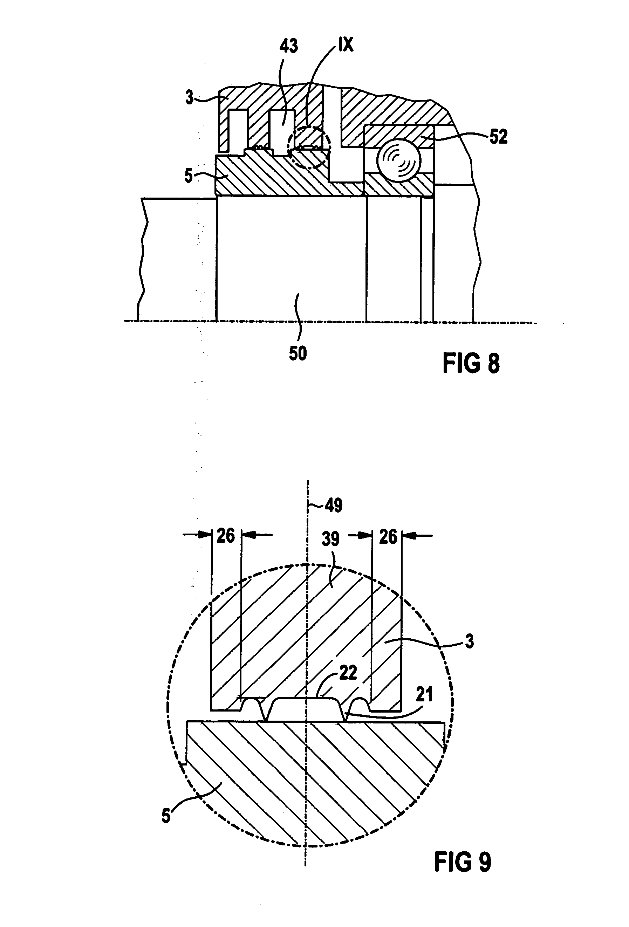

Die Darstellung gemäß Figur 8 zeigt einen weiteren Ausschnitt einer berührungslosen Dichtung, wobei hier ein in Figur 9 vergrößert dargestellter Ausschnitt IX markiert ist. Figur 9 zeigt einen symmetrischen Aufbau eines Dichtsteges 39 bezüglich einer Symmetrielinie 49. An den äußeren Seiten des Dichtsteges 39 befindet sich jeweils ein flächiger Dichtungsbereich 26.

## Patentansprüche

1. Berührungslose Dichtung (1), welche zumindest ein kreisförmiges äußeres Element (3) und ein kreisförmiges inneres Element (5, 19) aufweist, welche berührungslos ineinander fügbar sind, welche sich in einem Dichtungsbereich (7, 9, 11, 13, 15, 17) beabstandet gegenüber stehen, von denen zumindest eines der Elemente (3, 5, 19) rotatorisch in Umfangsrichtung bewegbar ist und von denen zumindest eines der Elemente (3, 5, 19) einen spitzenartig rotatorisch verlaufenden Kamm (21) aufweist, wobei der Dichtungsbereich (9, 11, 15, 17) zumindest zwei kreisförmige Flächen (23, 25) aufweist, welche unterschiedlich größere Beabstandungen (27, 29) vom gegenüberliegenden Element (3, 5, 19) aufweisen, als die Beabstandung (31) des Kammes (21) vom gegenüberliegenden Element (3, 5, 19), **dadurch gekennzeichnet,**
**dass** der Kamm (21) beidseitig einen Kammfuß (22) aufweist, wobei zumindest ein Kammfuß (22) in eine kreisförmige Fläche (23) im Dichtungsbereich (9, 11, 15, 17) übergeht, die einen kleineren Abstand (27) zum gegenüberliegenden Element (3, 5, 19) als der Kammfuß (22) aufweist.

2. Berührungslose Dichtung (1) nach Anspruch 1,
**dadurch gekennzeichnet, dass** die berührungslose Dichtung (1) zumindest zwei Dichtstege (33, 35, 37, 39, 40) mit einer dazwischen liegenden Dichtkammer (43) aufweist.

3. Berührungslose Dichtung (1) nach einem der vorgenannten Ansprüche, **dadurch gekennzeichnet , dass** das innere Element (5) im Dichtungsbereich (9, 11) als eine Fläche ausgeführt ist und das äußere Element zumindest einen Kamm (21) aufweist.

4. Berührungslose Dichtung (1) nach einem der vorgenannten Ansprüche, **dadurch gekennzeichnet , dass** das äußere Element (3) im Dichtungsbereich (15, 17) als eine Fläche ausgeführt ist und das innere Element (19) zumindest einen Kamm (21) aufweist.

5. Berührungslose Dichtung (1) nach einem der vorgenannten Ansprüche, **dadurch gekennzeichnet , dass** der Kamm (21) verformbar ausgeführt ist.

6. Berührungslose Dichtung (1) nach einem der vorgenannten Ansprüche, **dadurch gekennzeichnet , dass** bei einem verformten Kamm (20) eine Materialzunahme im Fußbereich (45) erzielbar ist.

7. Berührungslose Dichtung (1) nach einem der vorgenannten Ansprüche, **dadurch gekennzeichnet , dass** ein Kamm (21) spiralförmig ausgeführt ist.

## Claims

1. Non-contacting seal (1) which has at least one circular outer element (3) and one circular inner element (5, 19) which can be contactlessly joined to one another, which are disposed opposite one another spaced apart in a sealing area (7, 9, 11, 13, 15, 17), of which at least one of the elements (3, 5, 19) is rotatorily movable in a circumferential direction and of which at least one of the elements (3, 5, 19) has a comb (21) running rotatorily in the manner of a point, wherein the sealing area (9, 11, 15, 17) has at least two circular surfaces (23, 25) which have spacings (27, 29) of different sizes from the opposite element (3, 5, 19) than the spacing (31) of the comb (21) from the opposite element (3, 5, 19),
**characterised in that** the comb (21) has a comb foot (22) on both sides, with at least one comb foot (22) passing into a circular surface (23) in the sealing area (9, 11, 15, 17), which circular surface has a smaller spacing (27) from the opposite element (3, 5, 19) than the comb foot (22).

2. Non-contacting seal (1) according to claim 1,
**characterised in that** the non-contacting seal (1) has at least two sealing ribs (33, 35, 37, 39, 40) with an intermediate sealing chamber (43).

3. Non-contacting seal (1) according to one of the preceding claims, **characterised in that** the inner element (5) in the sealing area (9, 11) is implemented as a surface and the outer element has at least one comb (21).

4. Non-contacting seal (1) according to one of the preceding claims, **characterised in that** the outer element (3) in the sealing area (15, 17) is implemented as a surface and the inner element (19) has at least one comb (21).

5. Non-contacting seal (1) according to one of the preceding claims, **characterised in that** the comb (21) is implemented as deformable.

6. Non-contacting seal (1) according to one of the preceding claims, **characterised in that** in the case of a deformed comb (20) an increase in material in the foot area (45) can be achieved.

7. Non-contacting seal (1) according to one of the preceding claims, **characterised in that** a comb (21) is implemented in a spiral shape.

## Revendications

1. Joint ( 1 ) d'étanchéité sans contact, qui a au moins un élément ( 3 ) extérieur circulaire et un élément ( 5, 19 ) intérieur circulaire, lesquels peuvent être assemblés l'un dans l'autre sans contact, qui dans une zone ( 7, 9, 11, 13, 15, 17 ) d'étanchéité sont mutuellement à distance, dont au moins l'un des éléments ( 3, 5, 19 ) peut être déplacé en rotation dans la direction périphérique et dont au moins l'un des éléments ( 3, 5, 19 ) a un peigne ( 21 ) en forme de pointe de révolution, la zone ( 9, 11, 15, 17 ) d'étanchéité ayant au moins deux surfaces ( 23, 25 ) circulaires qui sont à des distances ( 27, 29 ) de l'élément ( 3, 5, 19 ) opposé différentes de la distance ( 31 ) du peigne ( 21 ) à l'élément ( 3, 5, 19 ) opposé,
**caractérisé en ce que** le peigne ( 21 ) a un pied ( 22 ) de peigne des deux côtés, au moins un pied ( 22 ) de peigne se transformant en une surface ( 23 ) circulaire dans la zone ( 9, 11, 15, 17) d'étanchéité, surface qui a une distance ( 27 ) à l'élément ( 3, 5, 19 ) opposé plus petite que le pied ( 22 ) de peigne.

2. Joint ( 1 ) d'étanchéité sans contact suivant la revendication 1,
**caractérisé en ce que** le joint ( 1 ) d'étanchéité sans contact a au moins deux réglettes ( 33, 35, 37, 39, 40 ) d'étanchéité ayant une chambre ( 43 ) d'étanchéité entre elles.

3. Joint ( 1 ) d'étanchéité sans contact suivant l'une des revendications précédentes,
**caractérisé en ce que** l'élément ( 5 ) intérieur est réalisé dans la zone ( 9, 11 ) d'étanchéité sous la forme d'une surface et l'élément extérieur a au moins un peigne ( 21 ).

4. Joint ( 1 ) d'étanchéité sans contact suivant l'une des revendications précédentes,
**caractérisé en ce que** l'élément ( 3 ) extérieur est réalisé dans la zone ( 15, 17 ) d'étanchéité sous la forme d'une surface et l'élément ( 19 ) intérieur a au moins un peigne ( 21 ).

5. Joint ( 1 ) d'étanchéité sans contact suivant l'une des revendications précédentes,
**caractérisé en ce que** le peigne ( 21 ) est déformable.

6. Joint ( 1 ) d'étanchéité sans contact suivant l'une des revendications précédentes,
**caractérisé en ce que**, lorsqu'un peigne ( 20 ) est déformé, une augmentation de matière peut être obtenue dans la zone ( 45 ) de pied.

7. Joint ( 1 ) d'étanchéité sans contact suivant l'une des revendications précédentes,
**caractérisé en ce qu'**un peigne ( 21 ) est en forme de spirale.
